# EUROPEAN PATENT APPLICATION

(11) **EP 4 606 228 A2**
(43) Date of publication of application: **27.08.2025**
(21) Application number: 25189640.3
(22) Date of filing: 31.03.2017
(51) Int. Cl.: A23L 27/30

(54) **BEVERAGE HAVING DEGREE OF SWEETNESS INHIBITED FROM BEING REDUCED**

(30) Priority: 31.03.2016 JP 2016071130
(62) Divisional of application: 17775545.1
(71) Applicant: Suntory Holdings Limited, Osaka-shi, Osaka 530-8203 (JP)
(72) Inventor: URAI, Soichiro, Kawasaki-shi, 211-0067 (JP); NISHIBORI, Tomoyuki, Kawasaki-shi, 211-0067 (JP); IZUMI, Akiko, Kawasaki-shi, 211-0067 (JP); NAGAO, Koji, Kawasaki-shi, 211-0067 (JP)
(74) Representative: Mewburn Ellis LLP

(57) **Abstract**

An embodiment of the present invention aims to provide a low-calorie natural beverage suppressed in decrease in sweetness during storage. Provided is a beverage meeting the following conditions: (A) a mass ratio of (RebD and/or RebM)/RebA is 0.52 to 1.58; and (B) a total Brix of RebA and RebD and/or RebM in terms of sucrose is 5 to 10.

## Description

### TECHNICAL FIELD

An embodiment of the present invention relates to a beverage with suppressed decrease in degree of sweetness.

### BACKGROUND ART

There is an increasing demand for natural and low-calorie-oriented beverages. In pursuit of giving sweetness to beverages, much attention is being paid to high intensity natural sweeteners having a higher degree of sweetness than sucrose. In this context, a functional sweetener composition containing a vitamin, a high intensity sweetener, and a sweetness-improving composition is known (Patent Literature 1). There is also known a beverage containing a steviol glycoside as a natural sweetener (Patent Literature 2).

### CITATION LIST

### PATENT LITERATURE

Patent Literature 1: National Publication of International Patent Application No. 2009-517043
Patent Literature 2: Japanese Patent Laid-Open No. 2015-502404

### SUMMARY OF INVENTION

### TECHNICAL PROBLEM

Through research and development of natural and low-calorie-oriented beverages, the present inventors have found that a beverage containing a steviol glycoside as a high intensity sweetener experiences a decrease in sweetness during storage. A further study has led the inventors to infer that the decrease in sweetness is attributable to conversion of RebA, which is a main component of a steviol glycoside.

The present invention aims to provide a natural and low-calorie-oriented beverage with suppressed decrease in sweetness during storage.

### SOLUTION TO THE PROBLEM

An embodiment of the present invention is a beverage meeting the following conditions: (A) mass ratio of (RebD and/or RebM)/RebA is 0.52 to 1.58; and (B) the total Brix in terms of sucrose of RebA and RebD and/or RebM is 5 to 10.

### BRIEF DESCRIPTION OF DRAWINGS

[Figure 1] Figure 1 shows the influence of the proportion of Brix of RebD in terms of sucrose on the sweetness of a stored beverage (in which Brix in terms of sucrose is 10).
[Figure 2] Figure 2 shows the influence of the proportion of Brix of RebD in terms of sucrose on the sweetness of a stored beverage (in which Brix in terms of sucrose is 5).

### DETAILED DESCRIPTION OF THE INVENTION

Hereinafter, an embodiment of the present invention will be described with reference to the drawings.

The present invention is embodied in a beverage containing RebA and RebD and/or RebM, wherein the mass ratio of (RebD and/or RebM)/RebA is 0.52 to 1.58. The scope of the beverage according to the embodiment of the present invention encompasses a wide variety of common beverages. Examples of the beverages include refreshing beverages, non-alcoholic beverages, and alcoholic beverages. These may be carbonated or non-carbonated beverages. Specific examples include, but are not limited to, green tea beverages, black tea beverages, oolong tea beverages, barley tea beverages, sports drinks, milk beverages, coffee, coffee beverages, fruit juice beverages and vegetable beverages.

The term "Reb" is used herein as an abbreviation of Rebaudioside. Reb is known as a sweet component contained in stevia extract. The stevia extract can be obtained by extraction from stevia dry leaves, followed by purification. Stevia is an Asteraceous perennial plant native to Paraguay in South America, and its scientific name is Stevia Rebaudiana Bertoni. Stevia contains a component having sweetness which is about 300 times or more that of sucrose and, for this reason, stevia is grown and used as a source of natural sweetener. The types of Reb previously reported include various glycosides such as RebA, RebB, RebC, RebD and RebE and further include RebM described in National Publication of International Patent Application No. 2012-504552. Among the various types of Reb, RebA is evaluated as a sweetener having a high degree of sweetness and favorable sweetness and is widely used. Examples of methods for obtaining RebA, RebD and RebM include, but are not limited to: buying on the market; synthesis by organic chemical process or the like; and separation from or purification of a natural product. When RebA, RebD or RebM is obtained by separation or purification, a stevia extract can be used as a starting material. For example, RebA, RebD and RebM can be obtained by purification according to a method described in National Publication of International Patent Application No. 2009-517043, a method described in US8414949, and a method described in Foods 2014, 3(1), 162-175; doi: 10.3390/foods 3010162, respectively. Reb including RebA, RebD, and RebM may be analysed by any method, for example, by a high performance liquid chromatograph (HPLC) set under the conditions described in National Publication of International Patent Application No. 2012-504552. This method is used herein for analysis of Reb such as RebA, RebD and RebM, unless otherwise specified.

In the embodiment of the present invention, the mass ratio of RebD and/or RebM to RebA (this ratio is referred to herein as "(RebD and/or RebM)/RebA") in the beverage is adjusted to a specific range. This allows suppression of the RebA-associated decrease in sweetness of a steviol glycoside-containing beverage during storage, as well as exploitation of the favorable flavour-related characteristics of RebA. Examples of the flavour-related characteristics of RebA include, but are not limited to, providing body feeling and sweetness quickly and having sharp flavour. For example, the mass ratio of (RebD and/or RebM)/RebA can be adjusted to 0.52 to 1.58, preferably to 0.52 to 1.05, more preferably to 0.52 to 0.8, further preferably to 0.52 to 0.7. If the mass ratio is less than 0.52, the decrease in degree of sweetness of the beverage during storage cannot be suppressed. If the mass ratio is more than 1.58, the favorable flavour-related characteristics of RebA cannot be exhibited. The mass ratio of (RebD and/or RebM)/RebA, as described herein, means a value calculated by dividing the total mass of RebD and RebM by the mass of RebA when both RebD and RebM are present, and the conjunction "or" is used to encompass a situation where RebD or RebM is not contained.

In the embodiment of the present invention, the total Brix of RebA and RebD and/or RebM in terms of sucrose in the beverage can be adjusted to such an extent as not to cause any flavour-related disadvantage. The total Brix of RebA and RebD and/or RebM in terms of sucrose in the beverage is, for example, but not limited to, 5 to 10. The Brix in terms of sucrose can be calculated herein from the content of Reb and the degree of sweetness of Reb relative to that of sucrose. For example, RebA has a degree of sweetness which is 300 times that of sucrose, RebD has a degree of sweetness which is 285 times that of sucrose, and RebM has a degree of sweetness which is 285 times that of sucrose. Thus, Brix 1 in terms of sucrose corresponds to 33.3 ppm of RebA, 35.1 ppm of RebD and 35.1 ppm of RebM. The "ppm" as used herein means weight/weight (w/w) ppm, unless otherwise described. The total Brix of RebA and RebD and/or RebM in terms of sucrose, as described herein, means the sum of the Brix values of RebA, RebD and RebM in terms of sucrose when both RebD and RebM are present, and the conjunction "or" is used to encompass the situation where RebD or RebM is not contained.

In an embodiment of the present invention, the beverage is low calorie. Being low calorie means that the calorie content is preferably 20 kcal/100 ml or less, more preferably 2 kcal/100 ml, and further preferably zero.

When a beverage according to an embodiment of the present invention is produced as a carbonated beverage (namely, a sparkling beverage), the method for producing the carbonated beverage is not particularly limited. Carbonic acid gas may be generated by fermentation in the beverage or carbonic acid gas may be artificially injected into the beverage. When carbonic acid gas is injected into the beverage at a temperature of 20°C, the gas pressure can be, for example, 1 to 5 kgf/cm², preferably 2 to 5 kgf/cm² and more preferably 3 to 5 kgf/cm². The addition of carbonic acid gas can be accomplished by any method known to those skilled in the art. The carbonic acid gas pressure can be measured, for example, as follows: the beverage conditioned to 20°C is fixed in a gas internal pressure meter, and the cock of the gas internal pressure meter is opened to expose the beverage to the atmosphere and is then closed, after which the gas internal pressure meter is shaken, and a value is read when the pointer of the meter stops at a certain position. This method is used herein for measurement of the carbonic acid gas pressure, unless otherwise described.

A beverage according to an embodiment of the present invention may further contain other components usable in drinks and foods unless the other components impair the effect of the present invention, and examples of the components include: polyphenols such as catechins; plant extracts; caffeine; cinnamaldehyde; caramel coloring; sweeteners (including saccharides such as sugar and isomerized liquid sugars and high intensity sweeteners such as aspartame, sucralose, and acesulfame K); flavoring agents; acidulants (such as citric acid, tartaric acid, malic acid, phosphoric acid, and lactic acid); colorants; fruit juices; fruit juice purees; milk; milk products; other flavours; and nutrient supplements (such as vitamins, calcium, minerals, and amino acids). These components may be added singly or as a combination of a plurality of these components in the beverage. A beverage according to an embodiment of the present invention may be packed in a container, although the present invention is not limited thereto. The container used may be any form of container made of any material and is, for example, a glass bottle, a can, a barrel or a PET bottle.

The higher the temperature at which a RebA-containing beverage is stored, the greater the decrease in sweetness of the beverage. Thus, the effect of suppressing the decrease in sweetness, which is provided by embodiments of the present invention, becomes more beneficial as the storage temperature of the beverage increases. It should be understood that the embodiment of the present invention provides the effect of suppressing the decrease in sweetness of a RebA-containing beverage, regardless of the storage temperature, since the sweetness of such a beverage can decrease even during storage at ordinary temperatures, cold storage, or storage at lower temperatures if the storage period is long. The embodiment of the present invention is therefore preferably applicable to any beverages, including hot beverages to be stored under hot conditions, beverages to be stored under ordinary temperature conditions, and beverages to be stored under cold conditions.

Specific examples of embodiments of the present invention will be described hereinafter. The specific examples are given for better understanding of the present invention and are by no means intended to limit the scope of the invention.

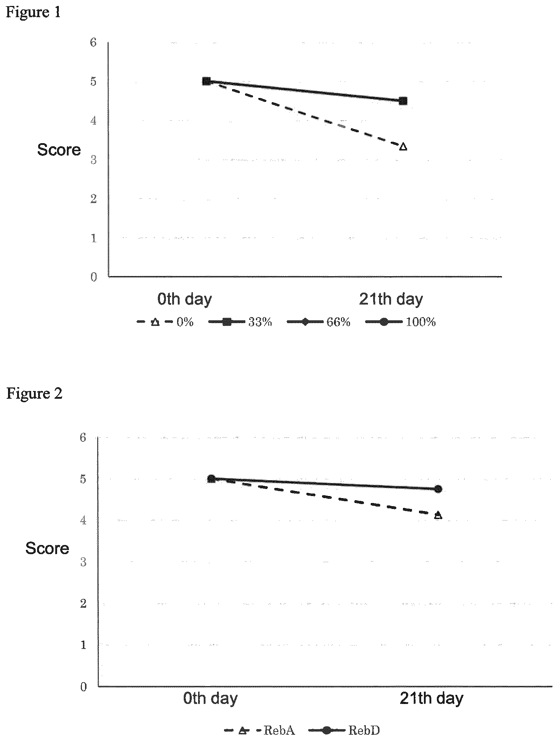

Beverages in which the total Brix in terms of sucrose was 10 were prepared by incorporation of RebA and RebD. The proportion of the Brix of RebD in terms of sucrose in the total Brix was adjusted to 0%, 33%, 66%, and 100%. Each of the beverages thus prepared was stored at 25°C for 21 days (3 weeks). Immediately before the start of the test, a portion of each beverage was sampled as a 0-day-stored beverage, which was stocked at 5°C until the time of sensory test. The 0-day-stored and 21-day-stored beverages were subjected to sensory evaluation of intensity of sweetness by expert panels. The intensity of sweetness of the 0-day-stored beverages was rated as "5 points", and the intensity of sweetness of the other beverages was evaluated with reference to the sweetness of the 0-day-stored beverages in decrements of 0.5 points (Figure 1). The scores shown in Figure 1 are average values. For the beverage in which the proportion of the Brix of RebD in terms of sucrose was 0% (RebA 100%), the intensity of sweetness decreased as a result of storage at 25°C. By contrast, for the beverage in which the proportion of the Brix of RebD in terms of sucrose was 100%, the decrease in intensity of sweetness tended to be suppressed. Similar results were obtained for the beverages in which the proportion of the Brix of RebD in terms of sucrose was 33% or 66%. This demonstrated that RebD is more stable in terms of intensity of sweetness than RebA. It was also confirmed that the decrease in intensity of sweetness of a beverage is suppressed when the proportion of the Brix of RebD in terms of sucrose in the total Brix of RebA and RebD in terms of sucrose in the beverage is 33% or more, namely, when the mass ratio (RebD and/or RebM)/RebA is 0.52 or more. Given that RebD and RebM have analogous chemical structures, it should be understood that results similar to those described above are obtained when RebM is incorporated in a beverage instead of RebD or when both RebM and RebD are incorporated in a beverage.

As in the above specific examples, beverages in which the total Brix in terms of sucrose was 5 were prepared by incorporation of RebA and RebD. The proportion of the Brix of RebD in terms of sucrose in the total Brix was adjusted to 0% and 100%. Each of the beverages thus prepared was stored at 25°C for 21 days (3 weeks). Immediately before the start of the test, a portion of each beverage was sampled as a 0-day-stored beverage, which was stocked at 5°C until the time of sensory test. The sensory test was conducted in the same manner as for the specific examples described above (Figure 2). As a result, it was demonstrated that, also for a beverage in which the total Brix in terms of sucrose is 5, RebD is more stable in terms of intensity of sweetness than RebA and the use of RebD suppresses the decrease in intensity of sweetness of the beverage. Given that RebD and RebM have analogous chemical structures, it should be understood that results similar to those described above are obtained when RebM is incorporated in a beverage instead of RebD or when both RebM and RebD are incorporated in a beverage.

Beverages in which the total Brix in terms of sucrose was 10 were prepared as specific examples of embodiments of the present invention by incorporation of RebA and RebD. The proportion of the Brix of RebA in terms of sucrose in the total Brix was adjusted to 0%, 20%, 40%, 60%, and 100%, and the rest of the total Brix was accounted for by RebD. The beverages thus prepared were subjected to sensory evaluation of sharpness by five expert panels. The beverages were evaluated with reference to the sharpness of the beverage in which the proportion of the Brix in terms of sucrose of RebA was 100%. A beverage for which such sharpness was perceived was rated as "O", while a beverage for which such sharpness was not perceived was rated as "×". A comprehensive evaluation was made on the basis of the observations of all of the panels (Table 1). The following three criteria were used for the comprehensive evaluation.

| | |
|---|---|
| No sharpness was perceived: | × |
| Sharpness was perceived: | ○ |
| Sharpness was vividly perceived: | ⊚ |

It was determined that the desired effect was obtained when rating "○" or "⊚" was given.

**Table 1**

| | RebA proportion | | | | |
|---|---|---|---|---|---|
| | 0 | 20 | 40 | 60 | 100 |
| Panel 1 | × | × | × | ○ | ○ |
| Panel 2 | × | × | × | ○ | ○ |
| Panel 3 | × | × | ○ | ○ | ○ |
| Panel 4 | × | ○ | ○ | ○ | ○ |
| Panel 5 | × | × | ○ | ○ | ○ |
| Comprehensive evaluation | × | × | ○ | ⊚ | ⊚ |

In consequence, it was confirmed that the higher the proportion of the Brix of RebA in terms of sucrose in a beverage, the higher the rating for the sharpness, and that sharpness is lost when the proportion is less than 40%. This result suggests that the sharpness of a beverage can be maintained when the proportion of the Brix of RebD in terms of sucrose in the total Brix in terms of sucrose is 60% or less and more preferably 50% or less. The mass ratio (RebD and/or RebM)/RebA in the beverage is calculated, from the proportion of the Brix, to be 1.58 (the calculation is made as follows: (0.6 × 35.1)/(0.4 × 33.3) = 1.58) or less, more preferably 1.05 or less, even more preferably 0.8 or less. Given that RebD and RebM have analogous chemical structures and the same degree of sweetness, it should be understood that results similar to those described above are obtained when RebM is incorporated in a beverage instead of RebD or when both RebM and RebD are incorporated in a beverage.

Beverages in which the Brix in terms of sucrose was 10 were prepared as specific examples of embodiments of the present invention by incorporation of any one of RebA, RebD and RebM. Each beverage was stored at 10°C or at 55°C for 2 days, and the compositions of steviol glycosides in the beverage were analysed. The analysis was carried out using HPLC (LCMS) to which a mass spectrometer was connected and which was set under the conditions described in National Publication of International Patent Application No. 2012-504552 (Table 2).

**Table 2**

| Reb incorporated | Storage temperature | Proportions of steviol glycosides after storage (%) | | | | | | | |
|---|---|---|---|---|---|---|---|---|---|
| | | RebA | RebB | RebC | RebD | Stebioside | RebF | RebM | Total |
| RebA | 10°C | 99.10 | 0.00 | 0.26 | 0.32 | 0.22 | 0.10 | 0.00 | 100.0 |
| | 55°C | 98.50 | 0.45 | 0.15 | 0.26 | 0.52 | 0.08 | 0.00 | 100.0 |
| RebD | 10°C | 1.42 | 0.00 | 0.02 | 98.40 | 0.13 | 0.00 | 0.00 | 100.0 |
| | 55°C | 1.53 | 0.00 | 0.01 | 98.30 | 0.09 | 0.02 | 0.06 | 100.0 |
| RebM | 10°C | 1.46 | 1.22 | 0.04 | 0.48 | 0.21 | 0.00 | 96.60 | 100.0 |
| | 55°C | 0.63 | 1.07 | 0.10 | 0.59 | 0.40 | 0.00 | 97.20 | 100.0 |

For the composition of steviol glycosides in the beverage prepared by incorporation of RebA, it was confirmed that the proportion of steviol glycosides other than RebA was higher in the case of storage at 55°C than in the case of storage at 10°C. In particular, the proportion of RebB significantly varied as a result of storage at 55°C. For the composition of steviol glycosides in the beverage prepared by incorporation of RebD, there was little difference in the compositions of steviol glycosides between storage at 10°C and storage at 55°C. The same trend was observed for the compositions of steviol glycosides in the beverages prepared by incorporation of RebM. These results suggest that the decrease in sweetness of a beverage prepared by incorporation of RebA is attributed to the fact that the conversion of RebA to another Reb causes a change in the composition of steviol glycosides in the beverage during storage. RebB, whose proportion was significantly increased during storage, has a degree of sweetness which is only about 50 times that of sucrose and lower than that of RebA. It is therefore suggested that RebB is responsible for the decrease in sweetness of the stored beverage. By contrast, for the beverages prepared by incorporation of RebD or RebM, the storage did not cause conversion of RebD or RebM or change in the composition of steviol glycosides in the beverage, which suggests that RebD or RebM does not affect the sweetness of the beverage. In this embodiment a temperature of 55°C, which is relatively high, was employed as the storage temperature to shorten the experimental period. It should be understood, however, that changes similar to those described above can occur even at a temperature lower than 55°C if the storage period is extended.
The following paragraphs, describing aspects of the invention, are part of the description:
1. A beverage meeting the following conditions:
   (A) a mass ratio RebM/RebA is 0.52 to 1.58; and
   (B) a total Brix of RebA and RebM in terms of sucrose is 5 to 10.
2. A beverage according to para. 1 wherein the mass ratio is 0.52 to 1.05.

## Claims

1. A beverage meeting the following conditions:
(A) a mass ratio RebD/RebA is 0.52 to 1.58; and
(B) a total Brix of RebA and RebD in terms of sucrose is 5 to 10.

2. A beverage according to claim 1 wherein the mass ratio is 0.52 to 1.05, such as 0.52 to 0.8, such as 0.52 to 0.7.

3. The beverage according to claim 1 or 2, wherein the beverage is selected from the group consisting of refreshing beverages, nonalcoholic beverages, and alcoholic beverages, and wherein the beverage is a carbonated or non-carbonated beverage.

4. The beverage according to any one of claims 1 to 3, wherein the beverage is selected from the group consisting of green tea beverages, black tea beverages, oolong tea beverages, barley tea beverages, sports drinks, milk beverages, coffee, coffee beverages, fruit juice beverages, and vegetable beverages.

5. The beverage according to any one of claims 1 to 4, wherein the beverage has calorie content of 20 kcal/100 ml or less, such as 2 kcal/100 ml, such as 0 kcal/100 ml.

6. The beverage according to any one of claims 1 to 5, wherein the beverage has gas pressure of 1 to 5 kgf/cm², 2 to 5 kgf/cm², or 3 to 5 kgf/cm² when measured at 20°C.

7. The beverage according to any one of claims 1 to 6, further comprising other component selected from the group consisting of polyphenols; catechins; plant extracts; caffeine; cinnamaldehyde; caramel coloring; sweeteners (including saccharides such as sugar and isomerized liquid sugars and high intensity sweeteners such as aspartame, sucralose, and acesulfame K); flavoring agents; acidulants (such as citric acid, tartaric acid, malic acid, phosphoric acid, and lactic acid); colorants; fruit juices; fruit juice purees; milk; milk products; other flavors; nutrient supplements (such as vitamins, calcium, minerals, and amino acids); and combination thereof.

8. The beverage according to any one of claims 1 to 7, wherein the beverage is packed in a container.

9. The beverage according to any one of claims 1 to 8, wherein sweetness decrease during storage is suppressed in the beverage.
